# EUROPÄISCHE PATENTSCHRIFT

(11) **EP 3 271 274 B1**
(45) Veröffentlichungstag und Bekanntmachung des Hinweises auf die Patenterteilung: **03.03.2021**
(21) Anmeldenummer: 16712294.4
(22) Anmeldetag: 17.03.2016
(51) Int. Cl.: B65G 54/02, B65G 17/48

(54) **TRANSPORTVORRICHTUNG MIT EINEM LINEARANTRIEB UND HOHENVESTELLBARTRÄGERN ZUM TRANSPORT VON OBJEKTEN**
CONVEYOR WITH LINEARMOTOR AND CARTS WITH VARIABLE HEIGHT SUPPORTING ELEMENT FOR TRANSPORTING ITEMS
CONVOYEUR À MOTEUR LINÉAIRE À CHARIOTS À HAUTEUR VARIABLE POUR LE TRANSPORT D'OBJETS

(30) Priorität: 18.03.2015 DE 102015104023
(43) Veröffentlichungstag der Anmeldung: 24.01.2018
(73) Patentinhaber: Weber Maschinenbau GmbH Breidenbach, 35236 Breidenbach (DE)
(72) Erfinder: CLÖSSNER, Stephan, 35630 Ehringshausen (DE); ECKHARDT, Christoph, 35236 Breidenbach (DE)
(74) Vertreter: Manitz Finsterwald Patent- und Rechtsanwaltspartnerschaft mbB
(86) Internationale Anmeldenummer: PCT/EP2016/055804
(87) Internationale Veröffentlichungsnummer: WO 2016/146744

(56) Entgegenhaltungen:
- WO-A1-99/26796
- DE-A1-102006 034 395
- DE-A1-102013 212 377
- DE-T2- 69 313 950
- JP-A- H03 293 222
- JP-A- H07 157 039
- JP-A- H07 172 538
- US-A- 4 960 203
- US-A1- 2004 227 925
- US-A1- 2008 029 366

## Beschreibung

Die Erfindung betrifft eine Vorrichtung zum Bewegen von Objekten, mit einer Mehrzahl individuell bewegbarer Transportmover zum Transport der Objekte, mit einem Bahnsystem für die Transportmover, in welchem die Transportmover entlang wenigstens einer vorgegebenen Bahn in einer Transportrichtung bewegbar sind, und mit einer Steuereinrichtung zum Steuern der Bewegungen der Transportmover in dem Bahnsystem, wobei die Transportmover jeweils zumindest einen mit dem Bahnsystem zusammenwirkenden Läufer, wenigstens einen Träger für Objekte und zumindest eine am Läufer angebrachte Halterung für den Träger umfassen.

Die Erfindung ist im Bereich der Lebensmittelverarbeitung einsetzbar, aber nicht auf diesen Bereich beschränkt. Dementsprechend kann es sich bei den Objekten um Lebensmittelprodukte handeln, beispielsweise um so genannte Portionen, die eine oder mehrere, z.B. gestapelte oder geschindelte, Scheiben umfassen, die von einem Lebensmittelprodukt, z.B. Wurst oder Käse, abgetrennt wurden.

Ein für die Erfindung grundsätzlich verwendbares Transportsystem, auf das hiermit im Hinblick auf das Erfordernis der Ausführbarkeit der Erfindung ausdrücklich Bezug genommen wird, wird von der Firma MagneMotion Inc. mit Sitz in Devens, Massachusetts, USA, angeboten. Dieses System basiert auf einem sogenannten LSM-Antrieb, also auf einem Antrieb durch lineare Synchronmotoren, der von einem sogenannten linearen Induktionsmotor (LIM-Antrieb) zu unterscheiden ist. Im Unterschied zu einem LIM-Antrieb wird bei einem LSM-Antrieb ein Magnetfeld nicht mittels des sogenannten elektromagnetischen Wanderfeldes induziert, sondern das Magnetfeld wird durch Permanentmagnete bereitgestellt. Wenn der Läufer des Linearmotors die Permanentmagnete trägt und der Stator des Linearmotors das elektromagnetische Wanderfeld erzeugt, dann kann man sich das Antriebsprinzip eines LSM-Antriebs bildlich so vorstellen, dass der mit dem Permanentmagneten versehene Transportmover von dem sich längs des Stators bewegenden Magnetfeld über die Transportstrecke gezogen wird. Ein solches Transportsystem bzw. Antriebsprinzip ist beispielsweise in WO 2003/029651 A2 und WO 2010/085670 A1 beschrieben. Auf diese Dokumente wird hiermit bezüglich der Offenbarung eines möglichen Antriebs- bzw. Funktionsprinzips für die Erfindung ausdrücklich Bezug genommen. Ein weiteres System zum Transportieren von Gegenständen ist in der DE 10 2006 034 395 A1 offenbart DE 10 2006 034 395 A1 offenbart eine Vorrichtung zum Bewegen von Objekten, mit einer Mehrzahl individuell mittels Magnetförder- und/oder Linearmotortechnik bewegbarer Transportmover zum Transport der Objekte,mit einem Bahnsystem für die Transportmover, in welchem die Transportmover entlang wenigstens einer vorgegebenen Bahn in einer Transportrichtung bewegbar sind, und mit einer Steuereinrichtung zum Steuern der Bewegungen der Transportmover in dem Bahnsystem, wobei die Transportmover jeweils zumindest einen mit dem Bahnsystem zusammenwirkenden Läufer, wenigstens einen Träger für Objekte und zumindest eine am Läufer angebrachte Halterung für den Träger umfassen, wobei der Träger relativ zu dem Läufer zwischen einer unteren Transportstellung und einer oberen Funktionsstellung verstellbar ist, und wobei der Träger durch Zusammenwirken mit einer Steuerkontur des Bahnsystems in die Funktionsstellung anhebbar ist.

US2009/0107806 A1 offenbart einen Transportmover, mit zumindest einem mit einem Bahnsystem zusammenwirkenden Läufer, wenigstens einem Träger für Objekte und zumindest einer am Läufer angebrachten Führung, und wobei der Träger relativ zu dem Läufer zwischen einer unteren Transportstellung und einer oberen Funktionsstellung verstellbar und dabei durch die Führung geführt ist, und wobei der Träger in einer Mehrzahl unterschiedlicher Orientierungen mittels der Führung einsetzbar und im eingesetzten Zustand jeweils relativ zur Führung unverdrehbar ist.

Das Bahnsystem bzw. die einzelnen Bahnen eines solchen Transportsystems können in eine Vielzahl aufeinanderfolgender Bahnelemente unterteilt werden, die gewissermaßen jeweils einen Einzel-Linearmotor bilden und von einer Steuereinrichtung individuell ansteuerbar sind. Wenn gleichzeitig die im Bahnsystem befindlichen Transportmover mittels der Steuereinrichtung identifizierbar sind, dann können auf diese Weise grundsätzlich beliebig viele Transportmover gleichzeitig in einem grundsätzlich beliebig komplexen Bahnsystem betrieben und dabei individuell bewegt werden.

Für die Identifizierung bzw. Lokalisierung der einzelnen Transportmover im Bahnsystem verwendet die vorstehend erwähnte Firma MagneMotion Inc. eine Technik, bei der jeder Transportmover mit einem Transducer versehen ist, der in den vom Bahnsystem gebildeten Stator ein Signal induziert, wodurch es der Steuereinrichtung ermöglicht wird, die exakte Position des Transportmovers mit einer von der Größe des Gesamtsystems abhängigen Genauigkeit von Bruchteilen eines Millimeters oder Bruchteilen eines Zentimeters zu bestimmen. Ein Vorteil dieses Systems besteht darin, dass keine externen Sensoren benötigt werden. Bei dem Steuersystem der Firma MagneMotion Inc. ist außerdem durch eine Unterteilung der Bahnen in eine Vielzahl von - gewissermaßen jeweils einen Einzel-Linearmotor darstellenden - Bahnelementen sichergestellt, dass keine Kollisionen zwischen aufeinanderfolgenden Transportmovern auftreten. So kann ein Transportmover nur dann in das nächste Bahnelement einfahren, wenn dies von der Steuereinrichtung gestattet wird, was insbesondere dann nicht der Fall ist, wenn sich ein anderer Transportmover in dem Bahnelement befindet.

Vor dem Hintergrund dieses grundsätzlich bekannten Transportsystems ist bei der Erfindung in einem möglichen Ausführungsbeispiel vorgesehen, dass das Bahnsystem als Stator des Linearmotors ausgebildet ist.

Insbesondere ist der Läufer jeweils ein Bestandteil eines linearen Synchronmotors, wobei insbesondere der Läufer zumindest einen Permanentmagneten umfasst und das Bahnsystem als Motorstator ausgebildet ist.

Insbesondere ist das Bahnsystem in eine Vielzahl von, insbesondere jeweils einen Einzel-Linearmotor darstellenden, Bahnelementen unterteilt, die von der Steuereinrichtung individuell ansteuerbar sind.

Die Transportmover sind vorzugsweise von der Steuereinrichtung identifizierbar.

Des Weiteren sind die Transportmover vorzugsweise von der Steuereinrichtung im Bahnsystem lokalisierbar.

Das Transportsystem weist eine Mehrzahl von Transportmovern auf, deren Gesamtanzahl von der jeweiligen Anwendung abhängig ist. Es kann vorgesehen sein, dass das Bahnsystem mehrere Dutzende bis einige Hundert Transportmover umfasst, d.h. es kann gewissermaßen ein regelrechter "Schwarm" von Transportmovern im Bahnsystem vorhanden sein, um eine Vielzahl von Objekten zu transportieren und gegebenenfalls Zusatzfunktionen durchzuführen wie z.B. eine Pufferung, ein Verteilen und/oder ein Zuordnen von Objekten, insbesondere Portionen.

Bei einem derartigen Transportsystem kommt insbesondere dem Auflegen von Objekten auf den Träger und dem Abnehmen von Objekten vom Träger eine besondere Bedeutung zu. Diese Objekthandhabung muss einfach, möglichst schonend und zuverlässig durchführbar sein. Wenn externe Handhabungseinrichtungen zum Einsatz kommen, wie beispielsweise Roboter, dann muss ein zuverlässiger Zugang dieser Handhabungseinrichtungen zum Träger gewährleistet sein. Zum Abnehmen von Portionen, die eine oder mehrere abgetrennte Lebensmittelscheiben umfassen, werden häufig sogenannte "Pick-und-Place"-Roboter oder "Picker" eingesetzt, die in der Regel mit Schaufeln versehene Greifer aufweisen. Sollen in Verbindung mit dem hier offenbarten Transportsystem derartige Roboter zum Einsatz kommen, so muss gewährleistet sein, dass diese eine auf dem Träger aufliegende Portion sicher, schonend und zuverlässig greifen können.

In bestimmten Anwendungen ist es wünschenswert, solche Transportmover einzusetzen, deren Träger dazu in der Lage sind, mehr als nur eine Portion zu transportieren. Die Portionen liegen dabei meist relativ dicht beieinander, da ansonsten seitlich relativ weit über die Bahn hinaus auskragende Träger erforderlich wären, die folglich vergleichsweise groß auszuführen wären und zu relativ starken Fliehkrafteinflüssen bei Kurvenfahrten führen würden. Abgesehen davon ist man generell bestrebt, den Platzbedarf für eine Strecke bzw. Bahn möglichst klein zu halten. In solchen Fällen muss beim Auflegen und Abnehmen einzelner Portionen außerdem darauf geachtet werden, dass die jeweils eingesetzte Handhabungsvorrichtung die jeweils andere Portion bzw. einen an der jeweils anderen Portion gerade durchgeführten Auflege- oder Entnahmevorgang nicht stört.

Aufgabe der Erfindung ist es daher, eine Vorrichtung der eingangs genannten Art bereitzustellen, die in Erfüllung der vorstehend erwähnten Anforderungen einen sicheren und zuverlässigen Transport sowie eine sichere und zuverlässige Handhabung der Objekte ermöglicht.

Die Lösung dieser Aufgabe erfolgt durch die Merkmale des Anspruchs 1 und durch die Merkmale des Anspruchs 12.

Die untere Transportstellung gewährleistet einen zuverlässigen und sicheren Transport der jeweiligen Objekte. Die diesbezüglich angehobene Funktionsstellung ermöglicht insbesondere externen Handhabungseinrichtungen einen einfachen und ungestörten Zugriff auf den Träger bzw. auf von dem Träger abzunehmende Objekte. Die Führung des verstellbaren Trägers durch die Halterung stellt zu jedem Zeitpunkt eine definierte Relativposition zwischen Träger und Läufer sicher, ohne dass zusätzliche Führungs- oder Positionierungsmittel erforderlich sind.

Weitere vorteilhafte Ausgestaltungen der Erfindung sind auch in den abhängigen Ansprüchen, der Beschreibung sowie der Zeichnung angegeben.

Die Halterung kann einen plattenförmigen Grundaufbau mit einer oder mehreren Aufnahmen für jeweils einen Träger umfassen. Dabei kann die Halterung eine rahmenartige Struktur aufweisen, bei der die oder jede Aufnahme rahmenförmig von stegartigen Abschnitten der Halterung begrenzt ist.

Der Träger kann in der Transportstellung mit einem Auflageabschnitt, der seitlich über einen beim Verstellen mit der Halterung zusammenwirkenden Führungsabschnitt des Trägers hinaus vorsteht, auf der Halterung aufliegen.

In der angehobenen Funktionsstellung liegt der Auflageabschnitt nicht mehr auf der Halterung auf, ist also von unten zugänglich, so dass der Auflageabschnitt von einer Handhabungseinrichtung im Rahmen des jeweils vorgesehenen Handhabungsprozesses genutzt werden kann. Dies hat den Vorteil, dass keine in hygienischer Hinsicht eventuell kritischen Bereiche des Trägers von externen Handhabungseinrichtungen berührt zu werden brauchen. Der Träger stellt so gewissermaßen eine Schnittstelle zwischen seiner unter hygienischen Gesichtspunkten möglicherweise kritischen Oberseite und dem in dieser Hinsicht weniger kritischen Bereich unterhalb der Trägeroberseite dar.

Der Auflageabschnitt kann von einem seitlich auskragenden Tragabschnitt des Trägers für Objekte gebildet sein. Hierdurch kann der Träger einen besonders einfachen Aufbau aufweisen.

Erfindungsgemäß ist es auch vorgesehen, dass die Halterung zumindest eine Aufnahme für den Träger umfasst, in die der Träger mit einem Führungsabschnitt einsetzbar ist. Auf diese Weise kann der Träger besonders einfach quer zur Verstellrichtung fixiert und in Verstellrichtung geführt werden.

In einer Weiterbildung können der Träger und die Aufnahme derart aufeinander abgestimmt sein, dass der Träger nach oben über die obere Funktionsstellung hinaus aus der Aufnahme der Halterung herausgenommen und folglich vollständig von der Halterung entfernt werden kann. Dies kann für verschiedene Zwecke genutzt werden. So kann beispielsweise vorgesehen sein, nicht die mittels der Träger transportierten Portionen oder Objekte direkt abzulegen oder aufzunehmen, sondern dies mittelbar über den auf einfache Weise von der Halterung entfernbaren Träger vorzunehmen. Ein Roboter beispielsweise braucht hierzu lediglich unter einen in der Funktionsstellung angehobenen Auflageabschnitt des Trägers zu fassen, um den Träger samt aufliegendem Objekt abzunehmen.

Gemäß einer Weiterbildung der Erfindung kann die Aufnahme an zumindest einer Seite eine Öffnung zum seitlichen Einbringen und Herausnehmen des Trägers umfassen. Insbesondere kann die Aufnahme eine mit dem Träger, insbesondere mit dessen Führungsabschnitt, zusammenwirkende Einrichtung aufweisen, die bewegungshemmend und/oder schwingungsdämpfend wirksam ist.

Die Halterung kann folglich wenigstens eine offene Seite aufweisen. Die offene Seite kann bezüglich der Transportrichtung nach vorne oder nach hinten weisen. Alternativ kann die Halterung bezüglich der Transportrichtung zur Seite hin offen sein.

Hierdurch ist es möglich, die Träger nicht nur nach oben, sondern auch zur Seite hin, d.h. bezogen auf die Transportrichtung nach vorne, nach hinten, nach links oder nach rechts, aus der Aufnahme herauszunehmen und wieder einzubringen. Die Träger müssen folglich nicht herausgehoben werden. Eine solche auch als "horizontal" zu bezeichnende Entnahme kann beispielsweise zu Reinigungszwecken erfolgen. Beispielsweise können die Träger seitlich eingeschoben und wieder herausgeschoben oder herausgezogen werden.

In Verbindung mit einer derartigen seitlichen Öffnung oder alternativ auch unabhängig davon, d.h. in Verbindung mit einer nicht an einer Seite offenen Aufnahme, kann die Halterung dort, wo sie mit dem Träger zusammenwirkt, mit einem z.B. flächigen oder langgestreckten Element beispielsweise aus Gummi oder einem anderen Material versehen sein, welches dazu dient, Relativbewegungen zwischen Halterung und Träger zu vermeiden oder wenigstens zu hemmen. Bei geeigneter Materialwahl kann hierdurch auch eine Schwingungs- bzw. Vibrationsdämpfung realisiert werden. Die die Aufnahme begrenzenden Kanten oder Randbereiche können beispielsweise mit aufgeschobenen Schonern versehen werden, die ebenfalls bewegungshemmend und/oder schwingungsdämpfend ausgebildet sein können.

Durch derartige Maßnahmen kann also eine erhöhte Haftung für den Träger realisiert werden, was außerdem den Vorteil, dass im Falle einer seitlich offenen Aufnahme, wie sie vorstehend erläutert wurde, der Träger daran gehindert ist, unbeabsichtigt aus der Aufnahme über die offene Seite herauszugelangen. Zusätzliche Sicherungs- bzw. Verriegelungsmaßnahmen für den Träger an der Halterung sind dann nicht erforderlich.

Erfindungsgemäß ist der Träger in einer Mehrzahl unterschiedlicher Orientierungen in die Halterung einsetzbar und im eingesetzten Zustand jeweils relativ zur Halterung unverdrehbar. Dies ermöglicht es, den Träger wahlweise in einer von mehreren räumlichen Orientierungen relativ zur Halterung und somit bezüglich des Bahnsystems insgesamt zu verwenden. Ein rechteckiger Träger bzw. ein Träger mit rechteckigem Tragabschnitt für die Objekte kann beispielsweise entweder in Querausrichtung oder in Längsausrichtung bezüglich des Bahnverlaufs in die Halterung eingesetzt werden. Ein keine Vorzugsrichtung aufweisender, z.B. quadratischer Träger bzw. ein Träger mit quadratischem Tragabschnitt für die Objekte kann in beliebiger Orientierung in die Halterung eingesetzt werden. Durch die Unverdrehbarkeit im eingesetzten Zustand ist die Beibehaltung der jeweils gewählten Orientierung gewährleistet.

Alternativ kann in einem nicht zur Erfindung gehörenden Beispiel der Träger im eingesetzten Zustand relativ zu der Halterung verdrehbar sein. Insbesondere können durch eine solche Verdrehbarkeit unterschiedliche Ablagepositionen für die Objekte auf dem Träger realisiert werden. Die Verdrehbarkeit des Trägers kann z.B. auf rein mechanische Weise oder elektromotorisch erfolgen.

In einer vergleichsweise einfachen mechanischen Ausgestaltung kann der Träger unter Ausnutzung der Bewegung des Transportmovers entlang der Bahn dadurch gedreht werden, dass eine insbesondere stationär bezüglich der Bahn an einer Verdrehstation vorgesehene Eingriffsvorrichtung in den Weg des Trägers entlang der Bahn eingreift und der Träger beim Vorbeibewegen an dieser Eingriffsvorrichtung um einen vorgegebenen Winkelbereich verdreht wird. Der Träger kann hierzu mit Eingriffselementen versehen sein, die dazu dienen, mit der erwähnten Eingriffsvorrichtung zusammenzuwirken. Derartige Elemente können beispielsweise gleichmäßig in Umfangsrichtung um einen z.B. im Wesentlichen kreiszylindrisch ausgebildeten Träger herum verteilte, in radialer Richtung von dem Träger abstehende Vorsprünge sein.

In einer weiteren Ausgestaltung des nicht zur Erfindung gehörenden Beispiels ist der Träger zwischen diskret verteilten Winkelpositionen verdrehbar. Hierdurch kann erreicht werden, dass nur bestimmte Winkelstellungen des Trägers relativ zur Halterung möglich sind. Beispielsweise können der Träger und die Halterung über sägezahnartig ausgebildete, nur in bestimmten Relativwinkelposition vollständig bzw. zumindest im Wesentlichen komplementär ineinandergreifende Auflageflächen zusammenwirken, die jeweils an den Stirnseiten kreiszylindrischer Abschnitte des Trägers und der Halterung ausgebildet sind. Beim Vorbeibewegen an einer jeweiligen Verdrehstation kann dann der Träger um einen oder mehrere Zähne der Auflageflächen in die nächste oder in eine der nächsten Relativwinkelstellungen verdreht werden.

Durch die erwähnte Eingriffsvorrichtung kann folglich dem Träger ein Drehmoment relativ zu der Halterung verliehen werden, während sich die Halterung zusammen mit dem Läufer des Transportmovers entlang der Bahn weiterbewegt. Der Verdrehvorgang ist beendet, wenn die Eingriffsvorrichtung den Träger aufgrund der Weiterbewegung des Transportmovers wieder freigibt.

Um die jeweiligen Winkelstellungen des Trägers und damit die Ablagepositionen für die Objekte (im Lebensmittelbereich beispielsweise unterschiedlichen Formen bzw. Ablagemuster von aus einzelnen abgetrennten Lebensmittelscheiben gebildeten Portionen) zu realisieren, können sich die Transportmover auch mehrfach an der Verdrehstation vorbeibewegen, und zwar abwechselnd in Vorwärts- und in Rückwärtsrichtung. Die Drehlagerung des Trägers auf der Halterung kann in einer Weiterbildung des Beispiels ratschenartig ausgebildet sein, um auf diese Weise durch mehrmaliges aufeinanderfolgendes Zusammenwirken mit der Eingriffsvorrichtung (z.B. jeweils in Vorwärtsrichtung, jeweils unterbrochen durch eine "Ausholbewegung" in Rückwärtsrichtung) eine Verdrehung um ein entsprechendes Mehrfaches eines jeweils kleinsten Verdrehwinkels zu bewirken.

Erfindungsgemäß ist es vorgesehen, dass der Träger durch Zusammenwirken mit einer Steuerkontur des Bahnsystems in die Funktionsstellung angehoben wird. In einer Weiterbildung der Erfindung kann es außerdem vorgesehen sein, dass der Träger durch Zusammenwirken mit der Steuerkontur durch Schwerkraftunterstützung wieder in die Transportstellung abgesenkt wird. Auf diese Weise kann die Bewegung des Transportmovers im Bahnsystem ausgenutzt werden, um beispielsweise mittels einer rampenartigen Kulisse einen in der unteren Transportstellung einlaufenden Träger bei Durchfahrt eines vorgegebenen Bahnabschnitts mittels der Kulisse anzuheben. Im Anschluss an einen Handhabungsvorgang, insbesondere eine Abnahme von transportierten Objekten, kann dann bei Weiterfahrt des Transportmovers der Träger schwerkraftunterstützt wieder in die Transportstellung abgesenkt werden.

Gemäß einer besonders bevorzugten Ausgestaltung der Erfindung kann die Halterung zur Aufnahme mehrerer unabhängig voneinander verstellbarer und geführter Träger ausgebildet sein. Insbesondere können zwei in Querrichtung nebeneinanderliegende Träger an einer gemeinsamen Halterung unabhängig voneinander verstellbar angeordnet sein. Ein unabhängiges Anheben bzw. Absenken kann dann beispielsweise durch eine linksseitig verlaufende Steuerkontur für den linken Träger und durch eine rechtsseitig verlaufende Steuerkontur für den rechten Träger erfolgen.

Gemäß einem Ausführungsbeispiel der Erfindung kann das Bahnsystem einen oder mehrere Kurvenabschnitte aufweisen, an deren Innenbereichen sich jeweils eine Steuerkontur befindet, durch welche der Träger eines Transportmovers auf ein durch voraus- und/oder hinterherfahrende Transportmover ungestörtes Niveau anhebbar ist.

Hierdurch kann dem Umstand begegnet werden, dass bei vergleichsweise dicht aufeinanderfolgenden Transportmovern in Kurvenbereichen der Bahn die sich innen um die Kurve bewegenden Träger der Transportmover gegenseitig stören können, wenn der kurveninnere Träger eines vorausfahrenden Transportmovers aufgrund der Kurvenfahrt in den Bereich des kurveninneren Trägers des nachfolgenden Transportmovers schwenkt. Durch Anheben des jeweils die Kurve durchfahrenden inneren Trägers befinden sich die Träger auf unterschiedlichen Höhenniveaus, so dass sie einander überlappen können und sich folglich nicht gegenseitig stören.

Auf diese Weise wird ein dichteres Auffahren der Transportmover auch in Kurvenbereichen ermöglicht. Die Transportkapazität des Gesamtsystems lässt sich hierdurch erhöhen, ohne dass das Bahnsystem entsprechend vergrößert werden müsste.

Des Weiteren kann gemäß einem Ausführungsbeispiel vorgesehen sein, dass zumindest ein Transportmover wenigstens zwei mit dem Bahnsystem zusammenwirkende, relativ zueinander bewegbare Läufer aufweist, wobei der Träger mit beiden Läufern über eine Stelleinrichtung gekoppelt ist, die dazu ausgebildet ist, eine Änderung des Abstands zwischen den beiden Läufern in eine Änderung der Orientierung des Trägers umzusetzen, insbesondere in eine Neigungsänderung des Trägers bezüglich der Transportrichtung.

Hierdurch kann der Träger und somit eine Auflagefläche für die Objekte derart schräggestellt werden, dass ein Verrutschen oder sogar ein Herunterrutschen eines Objektes auf bzw. von dem Träger beim Beschleunigen oder Verzögern des Transportmovers verhindert wird. Dies bedeutet auch, dass durch eine solche Neigungsveränderung des Trägers die Maximalgeschwindigkeit der Transportmover erhöht wird. Dies vergrößert den Durchsatz des Gesamtsystems.

Alternativ zu einer Orientierungsänderung des Trägers durch eine Abstandsveränderung zweier Läufer kann die Orientierung des Trägers durch Fremdbeeinflussung von außen verstellt werden. Dies ist auch für solche Transportmover möglich, die lediglich einen einzigen Läufer aufweisen. Im Bereich vor Streckenabschnitten, die vergleichsweise hohe Geschwindigkeiten ermöglichen oder die relativ niedrige Geschwindigkeiten erfordern, kann jeweils eine wie auch immer geartete Eingriffsvorrichtung vorhanden sein, die mit den Trägern sich vorbei bewegener Transportmover im Sinne einer entsprechenden Orientierungsveränderung, insbesondere Neigungseinstellung, zusammenwirken kann.

Gemäß einem weiteren Ausführungsbeispiel der Erfindung kann in dem Bahnsystem wenigstens eine Wiegestation vorgesehen sein, die wenigstens einen Wiegeplatz für einen in eine Wiegestellung angehobenen Träger aufweist, wobei insbesondere der Träger mittels der Wiegestation und/oder mittels einer separaten Steuerkontur relativ zu dem Läufer in die Wiegestellung anhebbar ist.

Beim Anheben des Trägers kann dieser derart von der Halterung freikommen, dass der Träger einschließlich eines gegebenenfalls aufgenommenen Objektes gewogen werden kann.

In einer beispielhaften Anwendung kann für jeden Transportmover z.B. nach dessen Reinigung das Taragewicht des Trägers bestimmt werden, bevor der Transportmover wieder in eine jeweils gewünschte Bahnstrecke eingeschleust oder beispielsweise einem Aufnahmebereich zugeführt wird, in welchem ein oder mehrere Objekte aufzunehmen sind. Der jeweils ermittelte Gewichtswert kann dem betreffenden Transportmover zugeordnet werden. Alternativ kann die Zuordnung zu dem betreffenden Träger oder zu der betreffenden Halterung erfolgen, und zwar insbesondere dann, wenn dieser Träger bzw. diese Halterung mit einem wie auch immer gearteten Informationsträger versehen ist, beispielsweise einem RFID-Chip.

Des Weiteren kann erfindungsgemäß vorgesehen sein, dass in dem Bahnsystem wenigstens eine Blasstation vorgesehen ist, die dazu ausgebildet ist, den Träger und/oder die Auflagefläche eines Trägers eines an der Blasstation befindlichen Transportmovers von unten mit einem Blasmedium zu beaufschlagen, wobei der Träger und/oder die Auflagefläche des Trägers mit einer oder mehreren nach oben offenen Durchbrechungen für das Blasmedium versehen ist.

Ein derartiges Durchblasen beispielsweise von Luft kann insbesondere an Stellen erfolgen, an denen aufgenommene Objekte, beispielsweise Portionen aus Lebensmittelscheiben, mittels einer Abnahmeeinrichtung wie beispielsweise einem Pick-and-Place-Roboter (auch als "Picker" bezeichnet) abgenommen werden.

Durch die Beaufschlagung mit dem Blasmedium kann sich das betreffende Objekt bzw. die Lebensmittelscheibenportion leichter lösen, was das Abnehmen des Objektes bzw. der Portion erleichtert. Vorteilhaft ist dies insbesondere bei zu einem Anhaften bzw. "Festkleben" neigenden Objekten wie insbesondere Lebensmittelprodukten.

Dabei können insbesondere Lebensmittelscheibenportionen auf sogenannte Underleaver oder Unterlagen, die z.B. aus Folie, Papier oder ähnlichem bestehen, abgelegt werden. Die Verwendung eines von unten wirksamen Blasmediums ist dann noch vorteilhafter. Beispielsweise das Unterfahren einer solchen Unterlage mittels eines insbesondere schaufelartigen Aufnehmers eines Greifers kann erleichtert werden, wenn der Rand der Unterlage zumindest leicht nach oben geblasen wird.

Die Blasstation ist vorzugsweise eine stationäre Einrichtung und z.B. einem entsprechend ausgestalteten Bahnabschnitt zugeordnet.

Allgemein kann im Zusammenhang mit allen hierin offenbarten Aspekten bei den Transportmovern jeweils vorgesehen sein, dass die Halterung lösbar am Läufer angebracht ist. Hierdurch ist es möglich, die Läufer der Transportmover mit unterschiedlichen Typen von Halterungen zu versehen.

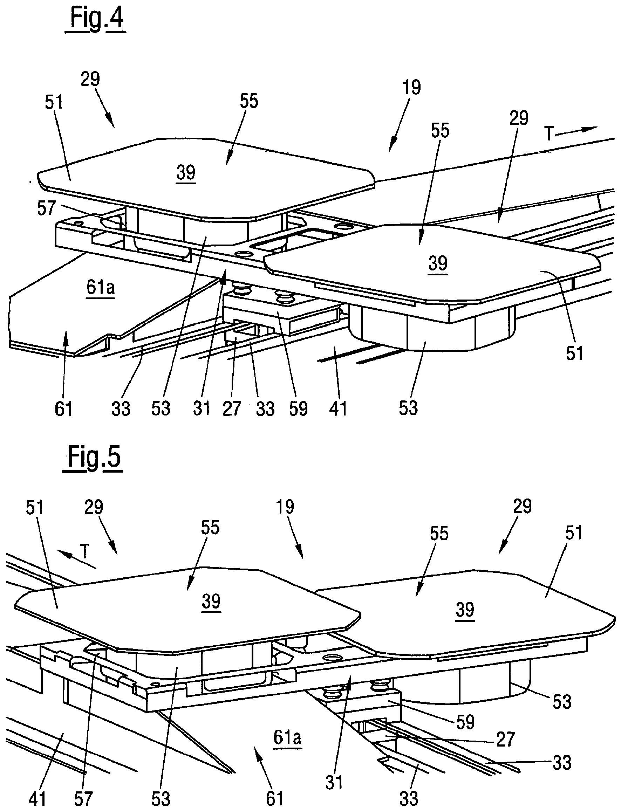

Ein Halterungs-Typ kann beispielsweise dazu ausgebildet sein, zwei Träger aufzunehmen, wie es beispielsweise in den Fig. 4 und 5 dargestellt ist.

Alternativ kann ein Halterungs-Typ zur Aufnahme lediglich eines Trägers ausgebildet sein, wobei insbesondere die Halterung mit dem Aufnahmebereich für den Träger seitlich auskragt.

Ein weiterer Halterungs-Typ, der insbesondere rahmenartig ausgebildet sein kann, kann dazu ausgebildet sein, sogenannte Trays oder allgemein Unterschalen von Verpackungen zu transportieren, und zwar derart, dass diese Trays bzw. Unterschalen so mit der Halterung zusammenwirken, dass sie nicht seitlich verrutschen können.

Ein weiterer alternativer Halterungs-Typ kann selbst als Träger für Objekte ausgebildet sein und beispielsweise eine ebene Auflagefläche aufweisen. Beispielsweise kann eine solche Halterung eine plattenförmige Auflage umfassen.

Gemäß einem weiteren Ausführungsbeispiel der Erfindung ist vorgesehen, dass zusätzlich zu den Transportmovern zumindest ein Funktionsmodul oder wenigstens ein Funktionsmover, der mindestens einen mit dem Warnsystem zusammenwirkenden Läufer, wenigstens ein Funktionsmodul und zumindest eine am Läufer angebrachte Halterung für das Funktionsmodul umfasst, vorgesehen ist, wobei das Funktionsmodul kompatibel zu den Halterungen der Transportmover ausgebildet ist.

Folglich kann ein Läufer samt Halterung entweder als Transportmover oder als ein Funktionsmover dienen. Um als Funktionsmover zu dienen, wird der Träger durch ein Funktionsmodul ersetzt, das aufgrund seiner Kompatibilität zusammen mit der Halterung des betreffenden Transportmovers verwendet werden kann. Eine für einen Träger konzipierte Aufnahme der Halterung kann folglich bei Bedarf als Aufnahme für ein Funktionsmodul genutzt werden.

Das Funktionsmodul kann beispielsweise als Reinigungsvorrichtung, Schmiervorrichtung (bevorzugt einschließlich eines Schmierstoffvorrats), Desinfektionsvorrichtung (bevorzugt einschließlich eines Desinfektionsmittelvorrats), oder als Mess- und/oder Prüfeinrichtung für das Bahnsystem und/oder für dem Bahnsystem zugeordnete Stationen dienen.

Der Arbeits- bzw. Wirkungsbereich des Funktionsmoduls kann bezüglich der Transportrichtung oberhalb, unterhalb, vor oder hinter dem Funktionsmover liegen. Wenn die Halterung einen seitlich auskragenden Bereich zur Aufnahme eines Trägers aufweist, dann kann bei Verwendung eines Funktionsmoduls anstelle des Trägers aufgrund der Auskragung ein Bereich neben der Bahnstrecke mittels des Funktionsmoduls bedient werden.

Die Erfindung betrifft außerdem einen Transportmover für eine erfindungsgemäße Vorrichtung, wobei der Transportmover zumindest einen mit dem Bahnsystem zusammenwirkenden Läufer, wenigstens einen Träger für Objekte und zumindest eine am Läufer angebrachte Halterung für den Träger umfasst, wobei die Halterung zumindest eine Aufnahme für den Träger umfasst, in die der Träger mit einem Führungsabschnitt einsetzbar ist, und wobei der Träger relativ zu dem Läufer zwischen einer unteren Transportstellung und einer oberen Funktionsstellung verstellbar und dabei durch die Halterung geführt ist und wobei der Träger in einer Mehrzahl unterschiedlicher Orientierungen in die Halterung einsetzbar und im eingesetzten Zustand jeweils relativ zur Halterung unverdrehbar ist.

Die Erfindung wird im Folgenden beispielhaft unter Bezugnahme auf die Zeichnung beschrieben. Es zeigen:
- Fig. 1: einen nicht zur Erfindung gehörenden, in einem Bahnabschnitt angeordneten Transportmover zur Erläuterung und zum Verständnis der Erfindung,
- Fig. 2 und 3: jeweils eine schematische Draufsicht auf eine mögliche Ausgestaltung einer erfindungsgemäßen Gesamtanlage,
- Fig. 4 und 5: unterschiedliche perspektivische Ansichten eines Teils einer erfindungsgemäßen Vorrichtung mit einem erfindungsgemäßen Transportmover gemäß einem Ausführungsbeispiel der Erfindung,
- Fig. 6 bis 8: verschiedene Ansichten eines Trägers eines erfindungsgemäßen Transportmovers gemäß einem Ausführungsbeispiel der Erfindung, und
- Fig. 9 bis 12: jeweils Weiterbildungen der Erfindung.

Die im Folgenden beschriebenen Ausführungsbeispiele der Erfindung basieren auf einem Antriebsprinzip für Transportmover (im Folgenden auch einfach "Mover") in einem Bahnsystem durch lineare Synchronmotoren (LSM-Antrieb), wie es im Einleitungsteil unter Bezugnahme auf das Transportsystem der Firma MagneMotion Inc. beispielhaft erläutert ist. Beliebig viele Mover in einem beliebig komplexen Bahnsystem können mittels einer Steuereinrichtung individuell, d.h. unabhängig voneinander, im Bahnsystem bewegt und mittels der Steuereinrichtung lokalisiert und identifiziert werden. Ferner können die Mover im Bahnsystem mit extrem hoher Genauigkeit bewegt und positioniert werden. Die Bewegungsgeschwindigkeiten sowie Beschleunigungen und Verzögerungen für die Mover können ebenfalls beliebig und individuell gewählt und vorgenommen werden.

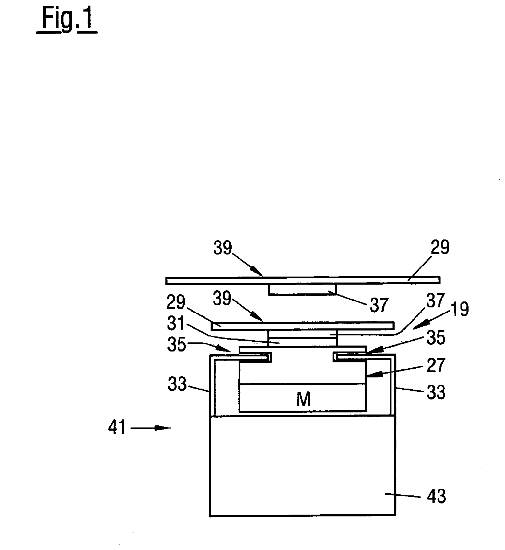

Einen Querschnitt, also einen Schnitt senkrecht zur Transportrichtung, durch eine Bahn mit darin angeordnetem Mover zeigt Fig. 1. Der hier dargestellte Mover gehört nicht zur Erfindung, sondern dient zur Erläuterung und zum Verständnis des der Erfindung zugrunde liegenden Bewegungsprinzips.

Ein Bahnabschnitt 41 des Bahnsystems umfasst eine als Stator 43 des LSM-Antriebs dienende Basis, die auch als mechanische Basis zur Anbringung des Bahnabschnitts 41 beispielsweise an einem Unterbau bzw. an wie auch immer gearteten Gestellen oder Halterungen dient.

In Fig. 1 dargestellt ist ein Bahnabschnitt vom sogenannten U-Typ, d.h. der Bahnabschnitt ist nach oben offen und die Mover 19 befinden sich oberhalb des Stators 43.

Als Führung für den Mover 19 dienen hier als Winkelbleche ausgeführte Führungsschienen 33, die in Schlitzen 35 laufen, welche an den linken und rechten Seitenflächen eines Läufers 27 des Movers 19 ausgebildet sind. Die Führungen des Bahnsystems für die Mover 19 können aber auch anders ausgestaltet sein.

Die Führung des Bahnsystems sorgt für eine definierte Relativposition des Läufers 27 bezüglich des Stators 43. Insbesondere wird hierdurch erreicht, dass eine Permanentmagnetanordnung M des Läufers 27 einen exakt definierten Abstand zum Stator 43 einhält.

Gemäß dem LSM-Antrieb ist der mit der Permanentmagnetanordnung M versehene Läufer 27 durch entsprechende Ansteuerung des Stators 43 mittels einer hier nicht dargestellten Steuereinrichtung in Transportrichtung längs des Stators 43 und somit in der den Stator 43 umfassenden Bahn bewegbar. Während dieser Bewegung wird der Läufer 27 durch die Führungsschienen 33 geführt.

Auf dem Läufer 27 ist ein Träger 29 angeordnet, der eine beispielsweise ebene Auflagefläche 39 bereitstellt, um Lebensmittelportionen oder andere Objekte zu transportieren.

Der Träger 29 kann mit dem Läufer 27 fest verbunden sein. In einer alternativen Ausgestaltung ist der Träger 29 am Läufer 27 lösbar angebracht.

Zwischen Träger 29 und Läufer 27 ist ein grundsätzlich beliebig ausgestalteter Halter 31 vorgesehen. Bei lösbarer Anbringung des Trägers 29 am Läufer 27 kann der Halter 31 als Bestandteil einer Kupplung ausgebildet sein bzw. einen Kupplungsabschnitt bilden, der mit einem entsprechenden Kupplungsabschnitt 37 des Trägers 29 zusammenwirkt. Das Zusammenwirken zwischen Läufer 27 und Halter 31 bzw. zwischen Halter 31 und Träger 29 kann grundsätzlich auf beliebige Art und Weise erfolgen. Es kann eine rein mechanische Verbindung vorgesehen sein. Es ist auch möglich, dass der Träger 29 am Halter 31 bzw. der Halter 31 am Läufer 27 magnetisch gehalten wird. Der Halter 31 kann auch dazu ausgebildet sein, Relativbewegungen des Trägers 29 relativ zum Läufer 27 zuzulassen, beispielsweise ein Verdrehen um eine vertikale Achse, um auf diese Weise Portionen drehen bzw. ausrichten zu können.

Der Träger 29 kann auch unmittelbar mit dem Läufer 27 verbunden sein. Der Halter 31 zwischen Träger 29 und Läufer 27 wird dann durch die zusammenwirkenden Bereiche bzw. Kupplungsabschnitte von Träger 29 und Läufer 27 gebildet.

Wie in Fig. 1 angedeutet, ermöglicht eine lösbare Anbringung des Trägers 29 am Halter 31 eine Verwendung des Läufers 27 mit unterschiedlichen, beispielsweise unterschiedlich großen Trägern. So zeigt Fig. 1 rein beispielhaft einen mit einem Kupplungsabschnitt 37 versehenen Träger 29, dessen Auflagefläche 39 größer ist als jene des in Fig. 1 am Läufer 27 angebrachten Trägers 29.

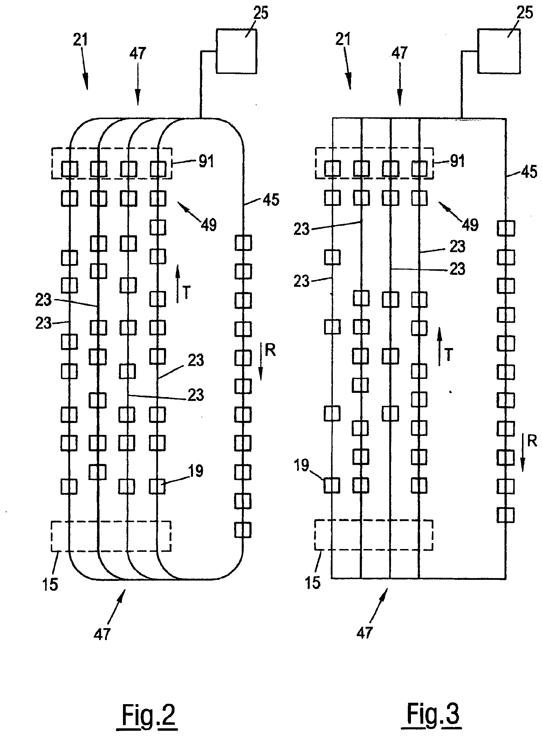

Eine erfindungsgemäße Gesamtanlage, d.h. ein erfindungsgemäßes System, in welchem die erfindungsgemäße Bewegungsvorrichtung bzw. das erfindungsgemäße Transportsystem einschließlich des Bahnsystems lediglich einen - wenn auch wesentlichen - Bestandteil darstellt, ist in den Fig. 2 und 3 in unterschiedlichen möglichen Ausgestaltungen dargestellt, wobei die Darstellung jeweils zur Veranschaulichung der erfindungsgemäßen Möglichkeiten schematisiert und vereinfacht erfolgt.

Die Systeme umfassen jeweils einen zu einem Mehrspurbetrieb ausgebildeten Slicer 15, mit welchem mehrere Lebensmittelprodukte wie beispielsweise Wurst- oder Käselaibe gleichzeitig mittels eines planetarisch und/oder rotierend umlaufenden Kreis- oder Sichelmessers mit hoher Geschwindigkeit in Scheiben geschnitten werden können. Die Schnittgeschwindigkeit liegt je nach konkreter Ausgestaltung des Slicers 15 zwischen mehreren einhundert und einigen tausend Scheiben pro Minute.

Anstelle eines Slicers 15 kann sich an dem jeweiligen Ort optional auch jeweils eine wie auch immer geartete Übergabeeinrichtung für Portionen befinden, beispielsweise wenigstens ein sogenanntes Einlegeband.

Aus den abgetrennten Scheiben werden in der Regel Portionen gebildet, die mehrere abgetrennte Scheiben umfassen.

Die dargestellten Systeme umfassen jeweils eine hier nicht näher erläuterte Verpackungsmaschine 91, an der die aus den abgetrennten Scheiben gebildeten Portionen verpackt werden. Hierfür ist es häufig erforderlich, die gebildeten Portionen auf ihrem Weg vom Slicer 15 zur Verpackungsmaschine 91 in vorgegebenen Formaten 49 oder Formatsätzen zusammenzufassen, d.h. in matrixartigen Anordnungen, in denen jeweils in mehreren nebeneinanderliegenden Spuren eine oder mehrere Portionen hintereinander angeordnet sind. Innerhalb eines jeweiligen Formates 49 müssen die Portionen in der Regel eine bestimmte Relativausrichtung zueinander aufweisen sowie mit vorgegebenen Abständen untereinander sowohl in Querrichtung als auch in Transportrichtung T angeordnet sein, damit die Portionen formatsatzweise an die jeweils nachgeordnete Verpackungsmaschine 91 abgegeben werden können.

Ein solches formatsatzweises Verpacken ist aber nicht zwingend erforderlich. Es ist beispielsweise auch möglich, Portionen mit Hilfe von Robotern von dem Transportsystem abzunehmen und in Verpackungen einzulegen.

Gleichwohl besteht in der Praxis eine Aufgabe eines zwischen einem Slicer 15 und einer Verpackungsmaschine 91 angeordneten Transportsystems für Lebensmittelportionen darin, in vielfältiger Weise auf diese Portionen einzuwirken. Dabei geht es nicht nur um eine eventuell erforderliche Formatsatzbildung, sondern beispielsweise auch um das Wiegen von Portionen und um das Aussortieren von für das Verpacken ungeeigneten Portionen.

In den Bahnsystemen 21 bewegen sich jeweils viele hier jeweils nur schematisch als Quadrate angedeutete Mover 19, von denen zumindest einige und insbesondere die meisten als Transportmover zum Transportieren von Lebensmittelportionen ausgebildet sind, wie sie vorstehend in Verbindung mit Fig. 1 erläutert sind.

Der Betrieb des Gesamtsystems wird jeweils von einer Steuereinrichtung 25 überwacht und gesteuert, die insbesondere die individuellen Bewegungen der Mover 19 in den einzelnen Bahnen 23 des Bahnsystems 21 steuert.

Anstelle einer Verpackungsmaschine 91 können auch nur ein Teil einer solchen Maschine oder eine oder mehrere Verpackungen oder Teile davon vorgesehen sein, in welche die mittels der Mover 19 herantransportierten Portionen abgelegt werden.

In dem Ausführungsbeispiel der Fig. 2 und 3 ist das erfindungsgemäße Transportsystem zu einem Vierspurbetrieb ausgebildet. Zwischen dem Slicer 15 und der Verpackungsmaschine 91 erstrecken sich vier parallel verlaufende Bahnen 23, die jeweils eine Vielzahl von Bahnabschnitten 41 umfassen, wie sie in Verbindung mit Fig. 1 erläutert sind.

Unter anderem sorgt das erfindungsgemäße Transportsystem dafür, dass vor der Verpackungsmaschine 91 die die zu verpackenden Portionen tragenden Mover 19 in einem Format 49 vorliegen, das eine Zeile aus - entsprechend der Spuranzahl dieses Gesamtsystems - vier nebeneinander angeordneten Portionen umfasst.

Im Anschluss an die Verpackungsmaschine werden die vier Bahnen 23 zu einer einzigen Bahn zusammengeführt, die eine Rückführstrecke 45 bildet, in welcher die nunmehr leeren Transportmover 19 in einer der Transportrichtung T entgegengesetzt gerichteten Rückführrichtung R zum Slicer 15 zurückgeführt werden. Im Bereich des Slicers 15 verzweigt die Rückführstrecke 45 wieder in einen vierspurigen Bereich.

Diese Übergänge im Bahnsystem 21 werden von speziellen Funktionsbereichen übernommen, die hier auch als Verzweigungen 47 bezeichnet werden.

Im Ausführungsbeispiel der Fig. 2 umfassen die Verzweigungen 47 gekrümmte Bahnabschnitte, also Kurvenabschnitte, in welchen die Mover 19 jeweils entlang einer gekrümmten Bahn bewegt werden.

Der in den Fig. 4 und 5 jeweils in einem nur teilweise gezeigten Bahnabschnitt 41 eines erfindungsgemäßen Bahnsystems dargestellte Transportmover 19 umfasst eine rahmenartige Halterung 31 mit einer rechteckigen Grundfläche, die quer zur Transportrichtung T orientiert ist.

Die Halterung 31 ist über einen Basisabschnitt 59 am Läufer 27 abgestützt, der mit dem Bahnsystem zusammenwirkt, wie es vorstehend in Verbindung mit den Fig. 1 bis 3 erläutert wurde.

In der Halterung 31 sind zwei quer zur Transportrichtung T nebeneinander angeordnete Aussparungen 57 vorgesehen, die als Aufnahmen vorgesehen sind und zum Einsetzen von nachstehend näher beschriebenen Trägern 29 dienen. Die Aufnahmeöffnungen 57 besitzen einen von einer Kreisform abweichenden Querschnitt, der hier als Quadrat mit abgerundeten oder abgeschrägten Eckbereichen ausgebildet ist.

Die identisch ausgeführten Träger 29 umfassen jeweils eine als Tragabschnitt 55 dienende Trägerplatte mit einer ebenen Auflagefläche 39 für zu transportierende Objekte, bei denen es sich gemäß einer bevorzugten Anwendung der Erfindung um Portionen handelt, die jeweils wenigstens eine von einem Lebensmittelprodukt mittels eines Hochgeschwindigkeitsslicers abgetrennte Scheibe umfassen.

Die Trägerplatte 55 ist an ihrer Unterseite mit einem zentral angeordneten, senkrecht nach unten abstehenden Führungsabschnitt 53 versehen. Der Führungsabschnitt 53 besitzt im Wesentlichen über seine gesamte Längserstreckung eine konstante äußere Querschnittsform, die entsprechend den Aufnahmen 57 der Halterung 31 eine quadratische Grundform mit abgerundeten oder abgeschrägten Eckbereichen aufweist.

Die Führungsabschnitte 53 der Träger 29 sind jeweils auf die Form der Aufnahmen 57 abgestimmt. Ein Kontakt zwischen Führungsabschnitt 53 und Begrenzung der Aufnahme 57 an allen vier Seiten beim Einsetzen ist möglich, wobei eine derart passgenaue Aufnahme der Führungsabschnitte 53 aber nicht zwingend ist. Es kann ausreichend sein, wenn die Träger 29 mit etwas Spiel in den Aufnahmen 57 der Halterung 31 sitzen.

Aufgrund der zumindest im Wesentlichen konstanten äußeren Querschnittsform der Führungsabschnitte 53 können die Träger 29 in vertikaler Richtung relativ zur Halterung 31 bewegt, d.h. zwischen einer unteren Transportstellung, die in den Fig. 4 und 5 jeweils für den rechten Träger 29 dargestellt ist, und einer oberen Funktionsstellung verstellt werden, die in den Fig. 4 und 5 jeweils der links dargestellte Träger 29 einnimmt.

In der unteren Transportstellung liegt der Führungsabschnitt 53 unten frei, so dass die Trägerplatte 55 mit ihrer Unterseite auf der Oberseite der Halterung 31 aufliegt. Die seitlich über den Führungsabschnitt 53 auskragenden Bereiche der Trägerplatte 55 bilden somit insgesamt einen Auflageabschnitt 51 des Trägers 29.

Aufgrund der von einer Kreisform abweichenden Querschnitte der Führungsabschnitte 53 und der entsprechend ausgebildeten Aufnahmeöffnungen 57 können die Träger 29 im in die Halterung 31 eingesetzten Zustand nicht verdreht werden. Die Ausrichtung oder Orientierung von mittels der Träger 29 transportierten Objekten bezüglich der Transportrichtung T bleibt somit erhalten und kann sich nicht unbeabsichtigt ändern. Die quadratische Grundform der Führungsabschnitte 53 und der Trägerplatten 55 sowie die zentrale Anordnung der Führungsabschnitte 53 an den Trägerplatten 55 gestattet es, die Träger 29 in jeder beliebigen der vier möglichen Orientierungen in die Aufnahmen 57 der Halterung 31 einzusetzen, ohne dass sich die Orientierung der von den Trägerplatten 55 bereitgestellten Auflageflächen 39 für die Objekte bezüglich des Bahnsystems bzw. der Transportrichtung T verändert. Es muss folglich beim Einsetzen der Träger 29 nicht auf eine korrekte Ausrichtung geachtet werden.

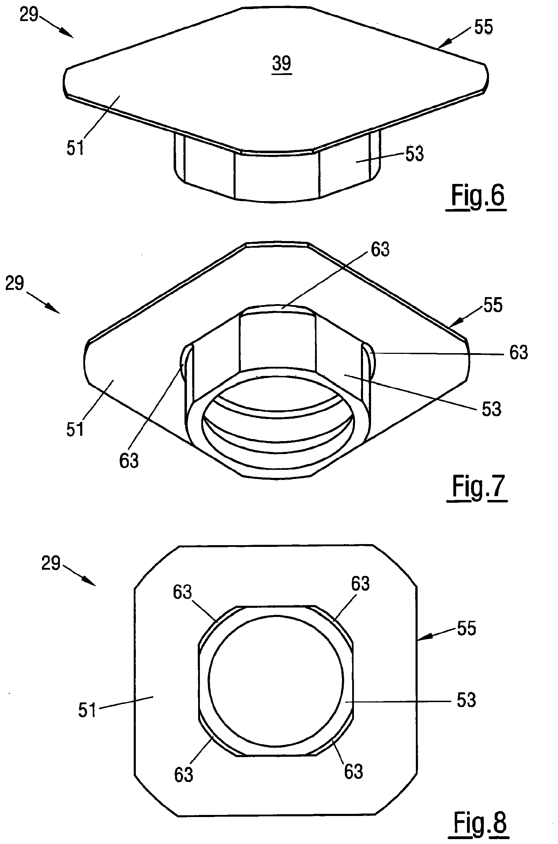

Den Fig. 6 bis 8, die jeweils ausschließlich den Träger 29 in einem nicht eingesetzten Zustand zeigen, ist unter anderem zu entnehmen, dass der Führungsabschnitt 53 in diesem Ausführungsbeispiel hohlzylindrisch mit kreisförmiger Innenkontur ausgebildet ist.

Abschrägungen 63 im Bereich des Übergangs der abgerundeten Eckbereiche in die Unterseite der Trägerplatte 55 ermöglichen es, dass der Träger 29 im eingesetzten Zustand in einem bestimmten Ausmaß relativ zur Halterung 31 verkippt werden kann, dabei aber weiterhin sicher in der Halterung 31 sitzt und durch diese am Transportmover gehalten wird. Eine Verkippbarkeit des Trägers 29 kann für Kurvenfahrten genutzt werden, worauf nachstehend kurz näher eingegangen wird. Des Weiteren kann durch Abschrägungen oder Abkantungen an den Führungsabschnitten 53 und/oder an den Begrenzungen der Aufnahmeöffnungen 57 ein Verkanten der eingesetzten Führungsabschnitte 53 vermieden werden.

Wie in den Fig. 4 und 5 für den jeweils links gelegenen Träger 29 dargestellt, erfolgt das Anheben und Absenken des Trägers 29 relativ zur Halterung 31 an einem vorgegebenen Bereich des Bahnsystems, der auf der entsprechenden Seite des betreffenden Bahnabschnitts 41 rampenartige Steuerkonturen für die Führungsabschnitte 53 der Träger 29 aufweist. Ein einlaufseitiger Rampenabschnitt 61a sorgt bei einlaufendem Transportmover 19 somit für ein Anheben des Trägers 29, der beim Auslaufen des dann keine Portion mehr tragenden Transportmovers 19 schwerkraftbedingt von selbst wieder zurück in die untere Transportstellung gelangt.

Wie in den Fig. 4 und 5 gezeigt, befindet sich in dem dargestellten Bereich der Bahn eine solche Steuerkontur 61 zum Anheben des Trägers 29 in Transportrichtung T gesehen lediglich linksseitig, während für den in Transportrichtung T gesehen rechten Träger 29 keine derartige Steuerkontur in dem dargestellten Bereich vorgesehen ist. Eine Handhabungseinrichtung, beispielsweise ein Roboter, kann folglich vom linken Träger 29 Objekte abnehmen, ohne dabei durch den rechten Träger 29 behindert zu werden.

Die Steuerkontur 61 bewirkt nicht nur das Anheben des Trägers 29, sondern sorgt gleichzeitig für eine Abstützung des Trägers 29 über dessen Führungsabschnitt 53, so dass von einer Handhabungseinrichtung auf die Trägerplatte 55 aufgebrachte Kräfte in die Steuerkurve 61 eingeleitet werden und das eigentliche Bahnsystem sowie die Halterung 31 hierdurch unbelastet bleiben.

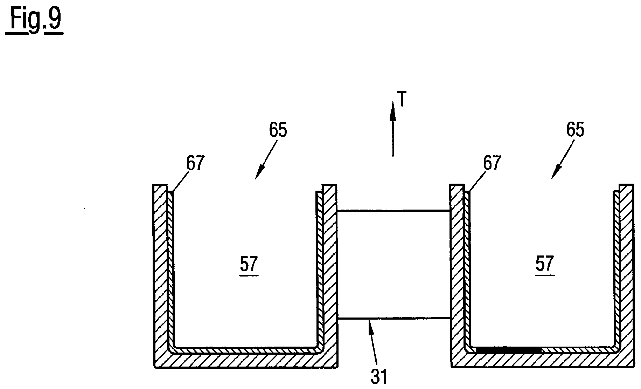

Fig. 9 zeigt eine schematische Draufsicht auf einen Transportmover gemäß einer Ausführungsform der Erfindung, von dem lediglich die Halterung 31 dargestellt ist. Die Halterung 31 umfasst zwei quer zur Transportrichtung T nebeneinander angeordnete Aufnahmen 57 für hier nicht dargestellte Träger.

Die Aufnahmen 57 sind jeweils bezüglich der Transportrichtung T nach vorne offen. Über diese seitlichen Öffnungen 65 können die Träger jeweils mit ihrem Führungsabschnitt 53 (vgl. beispielsweise Fig. 6 - 7) in die Halterung 31 eingeschoben und aus dieser wieder entnommen werden.

Separate Verriegelungs- oder Sicherungsmittel, die verhindern, dass die Träger versehentlich aus ihrer jeweiligen Aufnahme herausrutschen, beispielsweise bei einem Abbremsen des Transportmovers, sind in diesem Ausführungsbeispiel nicht erforderlich, da die Halterung 31 an ihren die Aufnahmen 57 begrenzenden Innenseiten jeweils mit einer Einrichtung 67 versehen ist, die auf einen eingeschobenen Träger eine erhöhte Reibungs- oder Klemmkraft ausübt und somit den Träger in der Aufnahme 57 festhält. Diese Einrichtung 67, die beispielsweise als Gummilippe oder als Elastomerschnur ausgebildet sein kann, hemmt somit eine Bewegung des Trägers relativ zur Halterung 31.

Gleichzeitig dient die Einrichtung 67 dazu, die Übertragung von Schwingungen bzw. Vibrationen zwischen dem Träger und der Halterung 31 zu verhindern oder zumindest zu reduzieren.

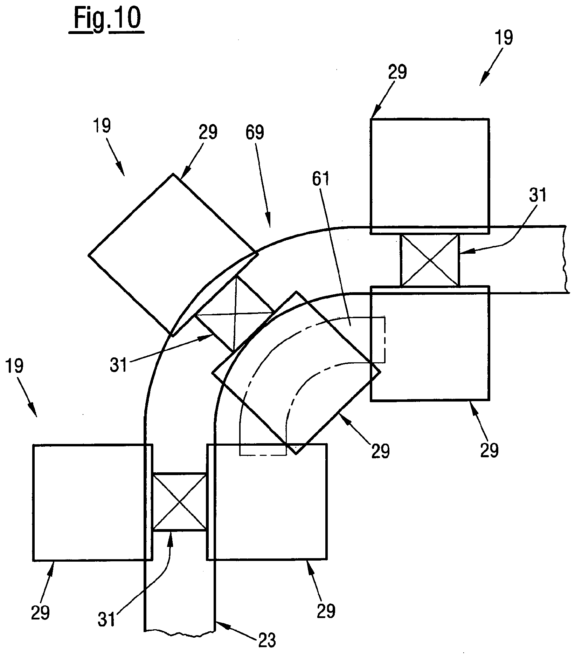

Fig. 10 veranschaulicht schematisch eine Anwendung einer Steuerkontur 61, die prinzipiell in gleicher Weise wirksam ist wie jene, die vorstehend in Verbindung mit den Fig. 4 und 5 beschrieben wurde. Die Steuerkontur 61 dient auch hier dazu, einen Träger 29 anzuheben, insbesondere aus einer Aufnahme der Halterung 31 teilweise herauszuheben. Der Umstand, dass durch ein derartiges Anheben zumindest der über einen Führungsabschnitt 53 (vgl. insbesondere Fig. 4 und 5) seitlich überstehende Teil des Trägers 29 bzw. des Auflageabschnitts 51 auf ein höheres Niveau gelangt, kann für Kurvenfahrten der Transportmover 19 ausgenutzt werden, wie es in Fig. 10 angedeutet ist.

Die in Fig. 10 angedeuteten Überlappungen der Träger 29 auf der Innenseite eines Kurvenabschnitts 69 der Bahn 23 zeigen, dass zu geringe Abstände von den Kurvenabschnitt 69 aufeinanderfolgend durchfahrenden Transportmovern 19 die Gefahr mit sich bringen, dass sich die auf der Kurveninnenseite aufeinanderfolgenden Träger 29 gegenseitig stören. Durch Anheben des kurveninneren Trägers 29 des jeweils den Kurvenabschnitt 69 gerade durchfahrenden Transportmovers 19 kann der Träger 29 auf ein durch die anderen Transportmover ungestörtes Niveau angehoben werden.

Wenn der Auflageabschnitt 51, wie beispielsweise in den Fig. 4 und 5 gezeigt, vergleichsweise dünn ist, braucht die Steuerkontur 61 nur einen vergleichsweise kleinen Hub zu bewirken, um eine gegenseitige Beeinflussung der Träger 29 im Bereich des Kurvenabschnitts 69 zu verhindern. Durch entsprechende Anpassung der Steuerkontur 61 kann gleichwohl der Hub erforderlichenfalls so groß gewählt werden, dass der betreffende Träger 29 auf ein Niveau gelangt, das noch oberhalb eines Objektes liegt, das auf dem Träger 29 eines vorausfahrenden bzw. hinterherfahrenden Transportmover 19 aufliegt.

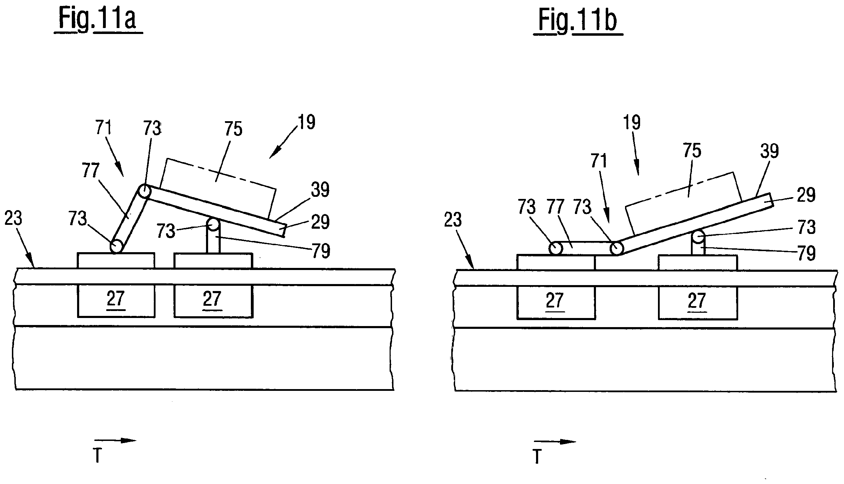

Das in den Fig. 11a und 11b schematisch angedeutete Ausführungsbeispiel veranschaulicht eine Möglichkeit, vergleichsweise starke Beschleunigungen bzw. Verzögerungen zu realisieren, ohne dass die Gefahr eines Herunterrutschens eines transportierten Objekts 75 vom Träger 29 besteht.

In diesem Ausführungsbeispiel ist einer der Transportmover 19 mit zwei Läufern 27 versehen, die unabhängig voneinander in der Bahn 23 bewegt werden können, so dass der Abstand zwischen den beiden Läufern 27 in Transportrichtung T verändert werden kann. Der gemeinsame Träger 29 ist mit den beiden Läufern 27 über eine Stelleinrichtung 71 gekoppelt, die in dem hier dargestellten Ausführungsbeispiel ein gelenkig zwischen dem Träger 29 und dem in Transportrichtung hinteren Läufer 27 verbundenes Kopplungsorgan 77 umfasst. Darüber hinaus ist der Träger 29 an ein Halteorgan 79 des in Transportrichtung T vorderen Läufers 27 angelenkt. Diese aufgrund der drei Achsen 73 gelenkige Anbindung des Trägers 29 an die beiden unabhängig voneinander bewegbaren Läufer 27 sorgt dafür, dass in Abhängigkeit von dem Abstand zwischen den beiden Läufern 27 die Neigung der Auflagefläche 39 des Trägers 29 verstellt werden kann.

In Fig. 11a ist die Auflagefläche 39 bezüglich der Transportrichtung T nach unten geneigt, und zwar aufgrund des vergleichsweise geringen Abstands zwischen den beiden Läufern 27. Hierdurch kann der Transportmover 19 vergleichsweise stark beschleunigt werden.

Entsprechend umgekehrt ist die Situation in Fig. 11b. Der relativ große Abstand zwischen den beiden Läufern 27 sorgt dafür, dass die Auflagefläche 39 bezüglich der Transportrichtung T nach hinten geneigt ist. Dies ermöglicht relativ starke Verzögerungen des Transportmovers 91.

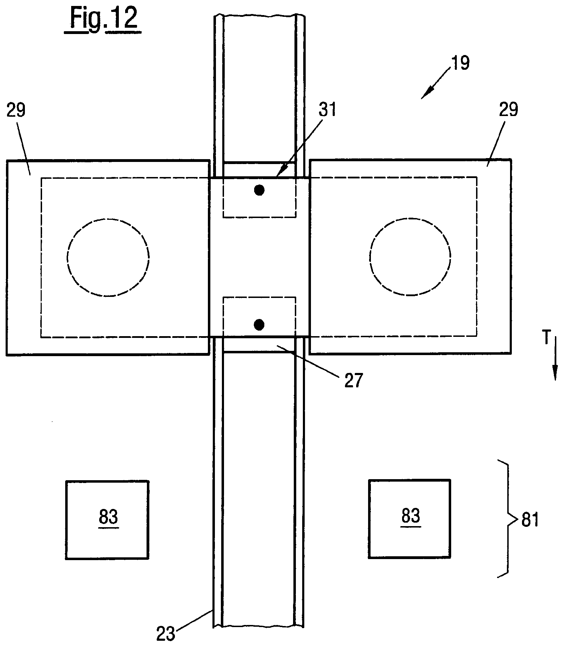

Fig. 12 zeigt schematisch die Integration einer Wiegestation 81 in das Bahnsystem. Stationär bezüglich eines Bahnabschnitts ist zu beiden Seiten der Bahn 23 jeweils eine einen Wiegeplatz 83 bildende Wiegezelle angeordnet. Durch Ausheben der Träger 29 eines an der Wiegestation 81 anhaltenden Transportmovers 19 können die Träger 29 jeweils von der Halterung 31 freikommen und folglich unbeeinflusst mit der jeweiligen Wiegezelle 83 zusammenwirken.

Das Ausheben der Träger 29 kann beispielsweise durch eine Steuerkontur erfolgen, wie sie vorstehend insbesondere in Verbindung mit den Fig. 4 und 5 sowie in Verbindung mit Fig. 10 erläutert wurde. Eine solche Steuerkontur kann der jeweiligen Wiegezelle 83 in Transportrichtung T gesehen vorgelagert und auf das Höhenniveau der Wiegezelle 83 angepasst sein. Alternativ können die Wiegezellen 83 jeweils selbst derart ausgebildet sein, dass sie bei einem in die Wiegestation 81 einfahrenden Transportmover 19 den betreffenden Träger 29 zwecks Gewichtsbestimmung ausheben können.

Weitere mögliche Ausgestaltungen der Erfindung, die gegebenenfalls, aber nicht zwingend, mit den vorstehend erläuterten Ausführungsbeispielen und auch untereinander kombinierbar sind, werden im Folgenden erläutert.

Wie vorstehend erwähnt, können die beiden Träger 29 wechselweise angehoben werden, so dass ein Roboter jeweils eine Portion besser ergreifen kann. Es ist beispielsweise auch möglich, dass ein Träger 29 mittels einer Steuerkontur derart weit angehoben wird, dass die Auflagefläche 39 mit einer Reinigungseinrichtung zusammenwirken kann, um so entweder im Vorbeifahren oder stationär an einer entsprechenden Reinigungsposition innerhalb des Bahnsystems mechanisch gereinigt werden zu können.

Mittels eines derartigen Abstreifprinzips können auch Objekte oder Portionen übergeben bzw. abgenommen werden.

Des Weiteren ist es möglich, einen Träger mittels einer Steuerkurve ganz nach oben auszustoßen, d.h. aus der Halterung 31 auszuwerfen. Auf diese Weise ausgestoßene bzw. ausgeworfene Träger können beispielsweise einem Reinigungsprozess zugeführt werden. Es ist auch möglich, dass die Träger mittels eines Roboters abgenommen und einer Reinigungs-, Förder- oder Lagervorrichtung übergeben werden. An einer anderen Stelle des Bahnsystems können dann gegebenenfalls aufbereitete bzw. gereinigte Träger wiederum automatisch mittels eines Roboter oder auch von Hand in die Halterungen 31 der Transportmover 19 eingesetzt werden.

Die Führungsabschnitte 53 der Träger 29 können als separat hergestellte Bauteile jeweils an den Trägerplatten 55 durch geeignete Mittel befestigt sein. Es ist aber auch möglich, die Träger 29 aus einem Stück zu fertigen, was Vorteile im Hinblick auf Hygiene und Reinigbarkeit mit sich bringt.

Wie vorstehend bereits erwähnt, können die Führungsabschnitte 53 der Träger 29 jeweils hinsichtlich Form und/oder Größe auf die Aufnahmen 57 in den Halterungen 31 derart abgestimmt sein, dass Spiel vorhanden ist, um die eingesetzten Träger 29 in der Halterung 31 verkippen zu können. Eine derartige kippbare Lagerung der Träger 29 kann genutzt werden, um einen Führungsabschnitt 53 von unten nicht zentral, sondern außermittig bzw. einseitig zum Beispiel mittels einer Steuerkontur zu beaufschlagen. Hierdurch ist es möglich, den Träger 29 beim Durchlaufen von Kurven im Bahnsystem schrägzustellen, um auf diese Weise Fliehkrafteinflüsse auf ein jeweils transportiertes Objekt zu kompensieren. Hierzu kann beispielsweise das Bahnsystem mit einer Auflaufschräge versehen sein, die zur jeweiligen Kurvenaußenseite hin angeordnet ist, wodurch der Träger 29 lediglich einseitig angehoben und aufgrund des Spiels relativ zur Halterung 31 schräggestellt wird.

Die freien Enden der Führungsabschnitte 53 können beispielsweise ballig oder abgeschrägt sein, um auf diese Weise ein Anlaufen an einer Steuerkontur zu begünstigen.

Die Auflageflächen 39 der Tragabschnitte 55 können glatt, gerillt, gewellt oder mit beispielsweise noppenartigen Vorsprüngen oder anderen Strukturen versehen sein. Des Weiteren können die Auflageflächen eine Beschichtung aufweisen.

Die Träger können aus einem Kunststoff hergestellt sein, der insbesondere mit einer blauen Einfärbung versehen ist, um auf diese Weise aufliegende Objekte besonders gut mit Hilfe von Kamerasystemen detektieren zu können.

Des Weiteren kann vorgesehen sein, dass der Träger aus einem Kunststoff mit Metalleinlagerungen hergestellt ist. Auf diese Weise können eventuell vom Träger abgelöste Teile einfach mit Hilfe von Metalldetektoren, die in der Praxis ohnehin häufig insbesondere für sogenannte Fertigpackungen vorgesehen sind, erkannt werden.

An geeigneten Stellen können die Träger mit Bohrungen oder Durchbrechungen versehen sein, um auf diese Weise ein Ablaufen, beispielsweise von Reinigungsfluiden, in allen relevanten Orientierungen des Trägers im Raum zu begünstigen.

Des Weiteren können die Träger mit Strukturen wie beispielsweise Bohrungen oder Durchbrechungen versehen sein, die dazu dienen, mit anderen Einrichtungen in Eingriff gebracht zu werden, beispielsweise mit einem Schleppförderer z.B. in Form eines Kettenförderers. In die Träger an geeigneten Stellen eingebrachte Bohrungen können des Weiteren als Sortier- und/oder Ausrichthilfe dienen. Dadurch lässt sich beispielsweise im Anschluss an einen Reinigungsprozess ein Ordnen der Träger vereinfachen, bevor die Träger wieder dem Bahnsystem zugeführt werden.

Des Weiteren kann vorgesehen sein, dass die Träger bereichsweise mit Stabilisierungen oder Verstärkungen vorgesehen sind, beispielsweise mit einem dickeren Randbereich und/oder mit Verstärkungsrippen, die beispielsweise eine strahlenförmige Anordnung aufweisen können.

### Bezugszeichenliste

- 15: Aufschneidevorrichtung, Slicer
- 19: Transportmover
- 21: Bahnsystem
- 23: Bahn
- 25: Steuereinrichtung
- 27: Läufer
- 29: Träger
- 31: Halterung
- 33: Führungsschiene
- 35: Schlitz
- 37: Kupplungsabschnitt
- 39: Auflagefläche
- 41: Bahnabschnitt
- 43: Stator
- 45: Rückführstrecke
- 47: Verzweigung
- 49: Format
- 51: Auflageabschnitt
- 53: Führungsabschnitt
- 55: Tragabschnitt
- 57: Aufnahme
- 59: Basisabschnitt
- 61: Steuerkontur
- 61a: einlaufseitiger Abschnitt der Steuerkontur
- 63: Abschrägung
- 65: seitliche Öffnung
- 67: hemmende und/oder dämpfende Einrichtung
- 69: Kurvenabschnitt
- 71: Stelleinrichtung
- 73: Achse
- 75: Objekt
- 77: Kopplungsorgan
- 79: Halteorgan
- 81: Wiegestation
- 83: Wiegeplatz
- 91: Verpackungsmaschine

- T: Transportrichtung
- R: Rückführrichtung
- M: Permanentmagnetanordnung

## Patentansprüche

1. Vorrichtung zum Bewegen von Objekten,
mit einer Mehrzahl individuell mittels Magnetförder- und/oder Linearmotortechnik bewegbarer Transportmover (19) zum Transport der Objekte,
mit einem Bahnsystem (21) für die Transportmover (19), in welchem die Transportmover (19) entlang wenigstens einer vorgegebenen Bahn (23) in einer Transportrichtung T bewegbar sind, und
mit einer Steuereinrichtung (25) zum Steuern der Bewegungen der Transportmover (19) in dem Bahnsystem (21),
wobei die Transportmover (19) jeweils zumindest einen mit dem Bahnsystem (21) zusammenwirkenden Läufer (27), wenigstens einen Träger (29) für Objekte und zumindest eine am Läufer (27) angebrachte Halterung (31) für den Träger (29) umfassen, wobei die Halterung (31) zumindest eine Aufnahme (57) für den Träger (29) umfasst, in die der Träger (29) mit einem Führungsabschnitt (53) einsetzbar ist, und
wobei der Träger (29) relativ zu dem Läufer (27) zwischen einer unteren Transportstellung und einer oberen Funktionsstellung verstellbar und dabei durch die Halterung (31) geführt ist, und
wobei der Träger (29) in einer Mehrzahl unterschiedlicher Orientierungen in die Halterung (31) einsetzbar und im eingesetzten Zustand jeweils relativ zur Halterung (31) unverdrehbar ist,
wobei der Träger (29) durch Zusammenwirken mit einer Steuerkontur (61) des Bahnsystems (21) in die Funktionsstellung angehoben wird.

2. Vorrichtung nach Anspruch 1,
**dadurch gekennzeichnet, dass**
der Träger (29) in der Transportstellung mit einem Auflageabschnitt (51), der seitlich über einen beim Verstellen mit der Halterung (31) zusammenwirkenden Führungsabschnitt (53) des Trägers (29) hinaus vorsteht, auf der Halterung (31) aufliegt.

3. Vorrichtung nach Anspruch 2,
**dadurch gekennzeichnet,**
**dass** der Auflageabschnitt (51) von einem seitlich auskragenden Tragabschnitt (55) des Trägers (29) für Objekte gebildet ist.

4. Vorrichtung nach einem der vorherigen Ansprüche,
**dadurch gekennzeichnet, dass**
die Aufnahme (57) an zumindest einer Seite eine Öffnung (65) zum seitlichen Einbringen und Herausnehmen des Trägers (29) umfasst, wobei insbesondere die Aufnahme (57) eine mit dem Träger (29), insbesondere mit dessen Führungsabschnitt (53), zusammenwirkende Einrichtung (67) aufweist, die bewegungshemmend und/oder schwingungsdämpfend wirksam ist.

5. Vorrichtung nach einem der vorherigen Ansprüche,
**dadurch gekennzeichnet, dass**
der Träger (29) durch Zusammenwirken mit der Steuerkontur (61) des Bahnsystems (21) durch Schwerkraftunterstützung in die Transportstellung absenkbar ist.

6. Vorrichtung nach Anspruch 5,
**dadurch gekennzeichnet, dass**
das Bahnsystem (21) einen oder mehrere Kurvenabschnitte (69) aufweist, an deren Innenbereichen sich jeweils eine Steuerkontur (61) befindet, durch welche der Träger (29) eines Transportmovers (19) auf ein durch voraus- und/oder hinterherfahrende Transportmover (19) ungestörtes Niveau anhebbar ist.

7. Vorrichtung nach einem der vorherigen Ansprüche,
**dadurch gekennzeichnet, dass**
zumindest ein Transportmover (19) wenigstens zwei mit dem Bahnsystem (21) zusammenwirkende, relativ zueinander bewegbare Läufer (27) aufweist, wobei der Träger (29) mit beiden Läufern (27) über eine Stelleinrichtung (71) gekoppelt ist, die dazu ausgebildet ist, eine Änderung des Abstands zwischen den beiden Läufern (27) in eine Änderung der Orientierung des Trägers (29) umzusetzen, insbesondere in eine Neigungsänderung des Trägers (29) bezüglich der Transportrichtung (T).

8. Vorrichtung nach einem der vorherigen Ansprüche,
**dadurch gekennzeichnet, dass**
in dem Bahnsystem (21) wenigstens eine Wiegestation (81) vorgesehen ist, die wenigstens einen Wiegeplatz (83) für einen in eine Wiegestellung angehobenen Träger (29) aufweist, wobei insbesondere der Träger (29) mittels der Wiegestation (81) und/oder mittels einer separaten Steuerkontur relativ zu dem Läufer (27) in die Wiegestellung anhebbar ist.

9. Vorrichtung nach einem der vorherigen Ansprüche,
**dadurch gekennzeichnet, dass**
in dem Bahnsystem (21) wenigstens eine Blasstation vorgesehen ist, die dazu ausgebildet ist, den Träger (29) und/oder die Auflagefläche (39) eines Trägers (29) eines an der Blasstation befindlichen Transportmovers (19) von unten mit einem Blasmedium zu beaufschlagen, wobei der Träger (29) und/oder die Auflagefläche (39) des Trägers (29) mit einer oder mehreren nach oben offenen Durchbrechungen für das Blasmedium versehen ist.

10. Vorrichtung nach einem der vorherigen Ansprüche,
**dadurch gekennzeichnet, dass**
zusätzlich zu den Transportmovern (19) zumindest ein Funktionsmodul oder wenigstens ein Funktionsmover, der zumindest einen mit dem Bahnsystem (21) zusammenwirkenden Läufer (27), wenigstens ein Funktionsmodul und zumindest eine am Läufer (27) angebrachte Halterung (31) für das Funktionsmodul umfasst, vorgesehen ist, wobei das Funktionsmodul kompatibel zu den Halterungen (31) der Transportmover (19) ausgebildet ist.

11. Vorrichtung nach einem der vorherigen Ansprüche,
**dadurch gekennzeichnet, dass**
die Halterung (31) zur Aufnahme mehrerer unabhängig voneinander verstellbarer und geführter Träger (29) ausgebildet ist.

12. Transportmover für eine Vorrichtung nach einem der vorhergehenden Ansprüche,
mit zumindest einem mit dem Bahnsystem (21) zusammenwirkenden Läufer (27), wenigstens einem Träger (29) für Objekte und zumindest einer am Läufer (27) angebrachten Halterung (31) für den Träger (29), wobei die Halterung (31) zumindest eine Aufnahme (57) für den Träger (29) umfasst, in die der Träger (29) mit einem Führungsabschnitt (53) einsetzbar ist, und wobei der Träger (29) relativ zu dem Läufer (27) zwischen einer unteren Transportstellung und einer oberen Funktionsstellung verstellbar und dabei durch die Halterung (31) geführt ist, und
wobei der Träger (29) in einer Mehrzahl unterschiedlicher Orientierungen in die Halterung (31) einsetzbar und im eingesetzten Zustand jeweils relativ zur Halterung (31) unverdrehbar ist,
wobei der Führungsabschnitt (53) derart ausgebildet ist, dass der Träger (29) durch Zusammenwirken mit einer Steuerkontur des Bahnsystems (21) in die Funktionsstellung anhebbar ist.

## Claims

1. An apparatus for moving objects,
having a plurality of transport movers (19) individually movable by means of magnetic conveying technology and/or linear motor technology for the transport of the objects;
having a path system (21) for the transport movers (19) in which the transport movers (19) are movable along at least one predefined path (23) in a transport direction (T); and
having a control device (25) for controlling the movements of the transport movers (19) in the path system (21),
wherein the transport movers (19) each comprise at least one runner (27) cooperating with the path system (21); at least one carrier (29) for objects; and at least one holder (31) attached to the runner (27) for the carrier (29), wherein the holder (31) comprises at least one receiver (57) for the carrier (29) into which a guide section (53) of the carrier (29) can be inserted, and wherein the carrier (29) is adjustable relative to the runner (27) between a lower transport position and an upper functional position and in so doing is guided by the holder (31), and
wherein the carrier (29) can be inserted into the holder (31) in a plurality of different orientations and is respectively non-rotatable relative to the holder (31) in the inserted state,
wherein the carrier (29) is raised into the functional position by cooperation with a cam contour (61) of the path system (21).

2. An apparatus in accordance with claim 1,
**characterized in that**,
in the transport position, a support section (51) of the carrier (29) lies on the holder (31), said support section (51) projecting laterally beyond a guide section (53) of the carrier (29) cooperating with the holder (31) on the adjustment.

3. An apparatus in accordance with claim 2,
**characterized in that**
the support section (51) is formed by a laterally projecting carrier section (55) of the carrier (29) for objects.

4. An apparatus in accordance with any one of the preceding claims,
**characterized in that**
the receiver (57) comprises an opening (65) for a lateral introduction and removal of the carrier (29) at at least one side, with the receiver (57) in particular having a device (67) which cooperates with the carrier (29), in particular with its guide section (53), and which acts as movement-inhibiting and/or vibration-damping.

5. An apparatus in accordance with any one of the preceding claims,
**characterized in that**
the carrier (29) is lowerable into the transport position by the assistance of gravity by cooperation with the cam contour (61) of the path system (21).

6. An apparatus in accordance with claim 5,
**characterized in that**
the path system (21) has one or more corner sections (69) at whose inner regions a respective cam contour (61) is located by which the carrier (29) of a transport mover (19) is raisable to a level not interfered with by leading and/or trailing transport movers (19).

7. An apparatus in accordance with any one of the preceding claims,
**characterized in that**
at least one transport mover (19) has at least two runners (27) cooperating with the path system (21) and movable relative to one another, with the carrier (29) being coupled to both runners (27) via an adjustment device (71) which is configured to convert a change of the spacing between the two runners (27) into a change of the orientation of the carrier (29), in particular into a tilt change of the carrier (29) with respect to the transport direction (T).

8. An apparatus in accordance with any one of the preceding claims,
**characterized in that**
at least one weighing station (81) is provided in the path system (21) and has at least one weighing point (83) for a carrier (29) raised into a weighing position, with the carrier (29) in particular being raisable into the weighing position relative to the runner (27) by means of the weighing station (81) and/or by means of a separate cam contour.

9. An apparatus in accordance with any one of the preceding claims,
**characterized in that**
at least one blowing station is provided in the path system (21) and is configured to apply a blowing medium from below to the carrier (29) and/or to the support surface (39) of a carrier (29) of a transport mover (19) located at the blowing station, with the carrier (29) and/or the support surface (39) of the carrier (29) being provided with one or more upwardly open apertures for the blowing medium.

10. An apparatus in accordance with any one of the preceding claims,
**characterized in that**,
in addition to the transport movers (19), at least one functional module or at least one functional mover is provided which comprises at least one runner (27) cooperating with the path system (21); at least one functional module;
and at least one holder (31) for the functional module attached to the runner (27), with the functional module being configured as compatible with the holders (31) of the transport movers (19).

11. An apparatus in accordance with any one of the preceding claims,
**characterized in that**
the holder (31) is configured for receiving a plurality of carriers (29) adjustable and guided independently of one another.

12. A transport mover for an apparatus in accordance with any one of the preceding claims,
comprising at least one runner (27) cooperating with the path system (21); at least one carrier (29) for objects; and at least one holder (31) for the carrier (29) attached to the runner (27), wherein the holder (31) comprises at least one receiver (57) for the carrier (29) into which a guide section (53) of the carrier (29) can be inserted, and
wherein the carrier (29) is adjustable relative to the runner (27) between a lower transport position and an upper functional position and in so doing is guided by the holder (31), and
wherein the carrier (29) can be inserted into the holder (31) in a plurality of different orientations and is respectively non-rotatable relative to the holder (31) in the inserted state,
wherein the guide section (53) is configured such that the carrier (20) is raisable into the functional position by cooperation with a cam contour (61) of the path system (21).

## Revendications

1. Dispositif pour déplacer des objets, comportant
une pluralité d'organes de transport (19) mobiles individuellement à l'aide d'une technique de transport magnétique et/ou à moteur linéaire et destinés transporter les objets,
un système de voie (21) pour les organes de transport (19), dans lequel les organes de transport (19) sont mobiles dans une direction de transport T le long d'au moins une voie donnée (23), et
un moyen de commande (25) pour commander les mouvements des organes de transport (19) dans le système de voie (21),
dans lequel
les organes de transport (19) comprennent chacun au moins un curseur (27) coopérant avec le système de voie (21), au moins un support (29) pour les objets et au moins un élément de maintien (31) monté sur le curseur (27) et destiné au support (29), l'élément de maintien (31) présentant au moins un logement (57) pour le support (29), logement dans lequel le support (29) peut être inséré avec une portion de guidage (53), et
le support (29) peut être réglé par rapport au curseur (27) entre une position de transport inférieure et une position opérationnelle supérieure en étant guidé par l'élément de maintien (31), et
le support (29) peut être inséré dans l'élément de maintien (31) selon une multitude d'orientations différentes et ne peut pas tourner par rapport à l'élément de maintien (31), dans l'état inséré,
le support (29) est relevé jusque dans la position opérationnelle par coopération avec un contour de commande (61) du système de voie (21).

2. Dispositif selon la revendication 1,
**caractérisé en ce que**
en position de transport, le support (29) repose sur l'élément de maintien (31) avec une partie d'appui (51) qui dépasse latéralement au-delà d'une portion de guidage (53) du support (29), portion qui coopère avec l'élément de maintien (31) lors du réglage.

3. Dispositif selon la revendication 2,
**caractérisé en ce que**
la partie d'appui (51) est formée par une portion porteuse (55) du support (29) pour des objets, qui fait saillie latéralement.

4. Dispositif selon l'une des revendications précédentes,
**caractérisé en ce que**
le logement (57) présente, sur au moins un côté, une ouverture (65) pour insérer et retirer latéralement le support (29), le logement (57) présentant en particulier un organe (67) qui coopère avec le support (29), en particulier avec sa portion de guidage (53), et qui agit de manière à empêcher les mouvements et/ou à amortir les vibrations.

5. Dispositif selon l'une des revendications précédentes,
**caractérisé en ce que**
le support (29) peut être abaissé jusque dans la position de transport en étant assisté par la gravité et en coopérant avec le contour de commande (61) du système de voie (21).

6. Dispositif selon la revendication 5,
**caractérisé en ce que**
le système de voie (21) comporte une ou plusieurs portions courbes (69) sur les zones intérieures desquelles se trouve un contour de commande respectif (61) au moyen duquel le support (29) d'un organe de transport (19) peut être relevé à un niveau non perturbé par des organes de transport (19) circulant devant et/ou derrière.

7. Dispositif selon l'une des revendications précédentes,
**caractérisé en ce que**
au moins un organe de transport (19) comporte au moins deux curseurs (27) qui coopèrent avec le système de voie (21) et qui peuvent être déplacés l'un par rapport à l'autre, le support (29) étant couplé aux deux curseurs (27) par l'intermédiaire d'un moyen de réglage (71) qui est réalisé pour convertir une modification de la distance entre les deux curseurs (27) en une modification de l'orientation du support (29), en particulier en une modification de l'inclinaison du support (29) par rapport à la direction de transport (T).

8. Dispositif selon l'une des revendications précédentes,
**caractérisé en ce que**
dans le système de voie (21) est prévue au moins une station de pesage (81) qui comprend au moins un emplacement de pesage (83) pour un support (29) relevé dans une position de pesage, en particulier le support (29) pouvant être relevé par rapport au curseur (27) jusque dans la position de pesage à l'aide de la station de pesage (81) et/ou à l'aide d'un contour de commande séparé.

9. Dispositif selon l'une des revendications précédentes,
**caractérisé en ce que**
dans le système de voie (21) est prévue au moins une station de soufflage qui est réalisée pour souffler par le bas un fluide à souffler sur le support (29) et/ou sur la surface d'appui (39) d'un support (29) d'un organe de transport (19) situé au niveau de la station de soufflage, le support (29) et/ou la surface d'appui (39) du support (29) étant pourvu(e) d'une ou de plusieurs traversées qui sont ouvertes vers le haut pour le fluide à souffler.

10. Dispositif selon l'une des revendications précédentes,
**caractérisé en ce que**
en plus des organes de transport (19), il est prévu au moins un module fonctionnel ou au moins un organe fonctionnel qui comprend au moins un curseur (27) coopérant avec le système de voie (21), au moins un module fonctionnel et au moins un élément de maintien (31) monté sur le curseur (27) et destiné au module fonctionnel, le module fonctionnel étant réalisé de façon compatible avec les éléments de maintien (31) des organes de transport (19).

11. Dispositif selon l'une des revendications précédentes,
**caractérisé en ce que**
l'élément de maintien (31) est réalisé pour recevoir plusieurs supports (29) réglables et guidés indépendamment les uns des autres.

12. Organe de transport pour un dispositif selon l'une des revendications précédentes, comportant au moins un curseur (27) coopérant avec le système de voie (21), au moins un support (29) pour des objets et au moins un élément de maintien (31) monté sur le curseur (27) et destiné au support (29), dans lequel
l'élément de maintien (31) présente au moins un logement (57) pour le support (29), logement dans lequel le support (29) peut être inséré avec une portion de guidage (53), et
le support (29) peut être réglé par rapport au curseur (27) entre une position de transport inférieure et une position opérationnelle supérieure en étant guidé par l'élément de maintien (31), et
le support (29) peut être inséré dans l'élément de maintien (31) selon une multitude d'orientations différentes et ne peut pas tourner par rapport à l'élément de maintien (31), dans l'état inséré, et
la portion de guidage (53) est réalisée de telle sorte que le support (29) peut être relevé jusque dans la position opérationnelle par coopération avec un contour de commande (61) du système de voie (21).
